# EUROPEAN PATENT SPECIFICATION

(11) **EP 4 686 790 B1**
(45) Date of publication and mention of the grant of the patent: **28.10.2026**
(21) Application number: 25190785.3
(22) Date of filing: 21.07.2025
(51) Int. Cl.: E02F 9/20, E02F 9/22, F15B 11/042

(54) **CONTROL SYSTEM**
STEUERSYSTEM
SYSTÈME DE COMMANDE

(30) Priority: 31.07.2024 GB 202411294
(43) Date of publication of application: 04.02.2026
(73) Proprietor: J.C. Bamford Excavators Limited, Uttoxeter Staffordshire ST14 5JP (GB)
(72) Inventor: SHANKAR, Ravi, Uttoxeter ST14 5JP (GB); ARREDONDO, David, Uttoxeter ST14 5JP (GB)
(74) Representative: Foot, Paul Matthew James

(56) References cited:
- EP-A1- 2 541 070
- WO-A1-2006/054582
- WO-A1-2023/014612

## Description

### FIELD OF THE INVENTION

The present disclosure relates to electric motor control of a hydraulic pump system and a working vehicle including a hydraulic pump system.

### BACKGROUND OF THE INVENTION

Working vehicles such as excavators, backhoe loaders, telehandlers, skid-steer loaders, dumpers and the like often have one or more hydraulically actuated devices such as working arm actuators, track motors, bucket actuators etc. Such hydraulically actuated devices operate by receiving a flow of hydraulic fluid from a hydraulic pump.

Typically, the hydraulic pump of a working vehicle receives hydraulic fluid from the reservoir via a first pipe and supplies hydraulic fluid to a hydraulic system via a second pipe. When the hydraulic pump is to be removed/replaced for maintenance or repair, the first and second pipes are disconnected and the hydraulic pump is de-mounted from the working vehicle. Such an arrangement is therefore time-consuming and awkward to maintain and replace. Furthermore, energy losses along the length of the first pipe reduce the efficiency of the hydraulic system.

In standard working vehicles driven by an internal combustion engine (ICE), the hydraulic pump is typically driven by the ICE. That is, the hydraulic pump includes a drive shaft which is coupled (either directly, or via a gearbox) to an output shaft of the ICE, so that the hydraulic pump outputs a flow of hydraulic fluid whenever the ICE is running.

Since a flow of hydraulic fluid is not required by the hydraulically actuated device(s) of the working vehicle at all times when the ICE is running, excess output from the hydraulic pump is returned to the hydraulic reservoir via a bypass circuit/relief valve. Alternatively, a swash angle of the pump is altered to reduce the output of hydraulic fluid from the hydraulic pump. In either case, the ICE-driven pump arrangement leads to reduced efficiency of the hydraulic system, since the pump is being driven unnecessarily when no flow of hydraulic fluid is required.

WO2023014612A1 discloses a hydraulic power unit, HPU, for providing a pressurised hydraulic fluid to a material testing apparatus, the HPU comprising: a reservoir for storing a hydraulic fluid; a pump for pumping the hydraulic fluid to an outlet connectable to the material testing apparatus; an alternating current, AC, electric motor arranged to drive the pump, wherein the electric motor is located within the reservoir; and an electrical inverter for providing an AC electrical supply to the electric motor, wherein the electrical inverter is arranged to control an operating point of the electric motor.

EP2541070A1 discloses a hydraulic pump for discharging hydraulic oil; a hydraulic actuator; an operating device operated in order to perform actuation control; a discharge pressure sensor for detecting a discharge pressure of the hydraulic oil discharged by the hydraulic pump; a hydraulic oil pressure sensor for detecting a hydraulic oil pressure of the hydraulic actuator; an electric motor for driving the hydraulic pump; an inverter for supplying electric power to the electric motor; and a controller for determining a difference between the discharge pressure detected by the discharge pressure sensor and the hydraulic oil pressure detected by the hydraulic oil pressure sensor, and adjusting the amount of the electric power supplied to the electric motor to perform control for changing the discharge pressure of the hydraulic pump so that the difference reaches a specific value.

WO2006054582A1 discloses a rotation control device of an electrically rotated shovel performs control of a rotating body by a small first torque command value when the rotating body is rotated at constant speed. Therefore, variation in inertia moment of the rotating body varies by telescoping of a boom or an arm affects the rotation speed of the rotating body, enabling rotation operation to be carried out with a sense similar to that in hydraulic drive. On the other hand, when acceleration is made by operating a rotation lever, rotation control is performed by a large second torque command value. Consequently, acceleration/deceleration is performed quickly and good lively operational feeling can be attained without sacrifice of workability.

The present disclosure seeks to overcome, or at least mitigate, one or more problems of the prior art.

### SUMMARY OF THE INVENTION

A first aspect of the invention provides a working machine according to the appended claims.

In the technical field of working machines, there is a technical prejudice to presume that a sensor indicating rotor position (and/or speed) in a motor is a requirement for a sufficiently accurate and dynamically reactive electric motor system, particularly in view of the high transitory loads and demand signals present in the context of working machines. Advantageously, even without knowledge of the rotational position and/or speed of the rotor of the electric motor from a rotor positioning sensor, the first aspect provides unexpected beneficial effects without significant detriment to the working machine.

Optionally, the hydraulic pump is a hydraulic displacement pump.

Advantageously, the use of a hydraulic displacement pump improves the correlation between a commanded position or speed response and the actual position or speed response, which can reduces error and improve system response to user inputs.

Optionally, the hydraulic displacement pump is a fixed hydraulic displacement pump.

Advantageously, the use of a fixed hydraulic displacement pump further improves the correlation between a commanded speed response and the actual speed response. In addition, having an electric motor driving a fixed displacement pump eliminates the need for variable swash control to vary pump output, which allows an infinite range of output flow rates without inefficiency of partial displacement associated with variable swash plate piston pumps.

Optionally, the pump is a bent axis piston pump.

Bent axis piston pumps have been found to offer a high displacement ratio due to large swash angles (>40°), which results in a power dense package in comparison to axial piston pumps. This provides a high volumetric efficiency, which leads to an increased overall efficiency of the pump module.

Optionally, the hydraulic pump assembly comprises a drive shaft for driving the hydraulic pump assembly. Optionally, the electric motor is coupled to the drive shaft.

Optionally, the motor controller is configured to calculate the motor speed command signal for the hydraulically actuated device based on one or more user inputs of the working machine.

Advantageously, the motor controller may improve the correlation between a commanded speed response and the actual speed response.

The torque command signal may be called a feedforward torque command signal.

Optionally, the torque command signal represents the expected hydraulic load.

Optionally, the motor controller is further configured to generate the torque command signal based on a pressure signal.

Optionally, the hydraulic system further comprises a pressure sensor in communication with the hydraulic fluid, wherein the pressure signal represents a pressure measurement of the pressure sensor.

Optionally, the torque command signal is generated based on a look up table which receives the pressure signal.

Advantageously, a look-up table (LUT) may be desirable for use with the motor controller as it simplifies a function which converts the pressure signal to a torque command signal and therefore improves system responsiveness and efficiency.

Optionally, the hydraulically actuated device is one of: a boom actuator for raising or lowering a working arm of the working machine; a track extender actuator for varying a length of tracks of the working machine; and/or, a dozer actuator for actuating a dozer blade of the working machine.

Optionally, the hydraulically actuated device is one of: a dipper arm actuator for pivoting a dipper arm of the working machine relative to a boom of the working machine; a swing actuator for pivoting the working arm of the working machine about a vertical axis relative to a chassis of the working machine; and/or a left track motor for moving the left track of the working machine forwards or backwards.

Optionally, the hydraulically actuated device is one of: a bucket actuator for pivoting a bucket of the working machine relative to a dipper arm of the working machine; a slew motor for slewing a chassis of the working machine relative to tracks of the working machine; and/or, a right track motor for moving the right track of the working machine forwards or backwards.

### BRIEF DESCRIPTION OF THE DRAWINGS

Examples of the invention will now be described with reference to the accompanying drawings, in which:
Figure 1 is a side view of a working vehicle according to an example;
Figure 2 is a schematic of a hydraulic system of the working vehicle of Figure 1;
Figure 3 is a simplified schematic of a hydraulic system of the working vehicle of Figure 1 showing only a single hydraulically actuated device;
Figure 4 is a simplified schematic of a hydraulic system of the working vehicle of Figure 1 showing only a single hydraulically actuated device, with optional additional features;
Figure 5 is a control diagram representing processes of the motor controller of Figures 3 and 4; and
Figure 6 illustrates three graphs of experimental data of hydraulic pump assemblies in operation.

### DETAILED DESCRIPTION OF EXAMPLE(S)

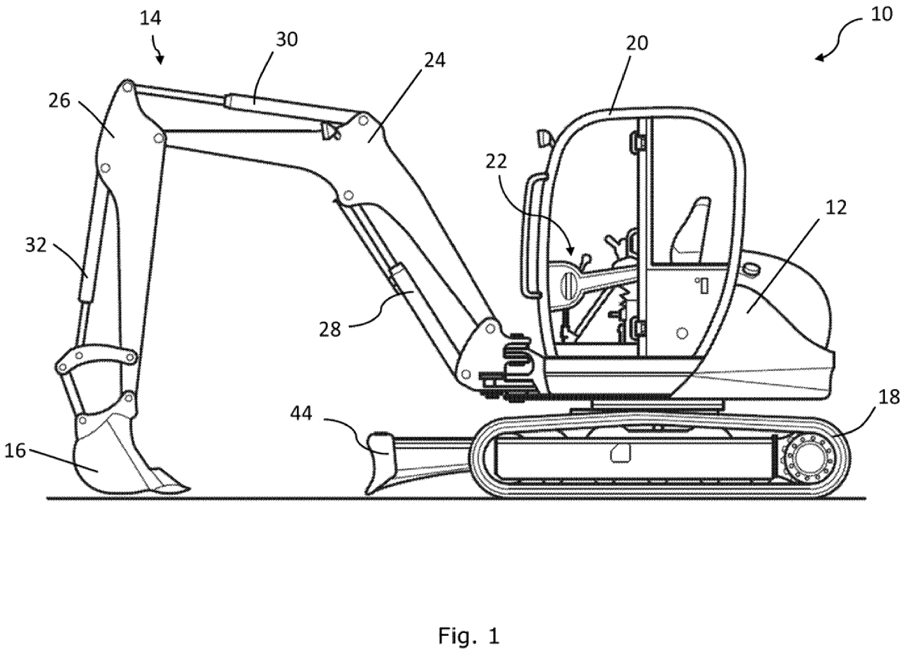

Referring to Figure 1, a working machine according to an example is indicated at 10. The working machine 10 has a chassis 12, a working arm 14 attached to the chassis 12, and an implement 16 connected to a free end of the working arm 14. In the illustrated example, tracks 18 are provided to move the working machine 10. In alternative examples, wheels may be provided to move the working machine 10, instead of tracks 18.

The working machine 10 includes a cab 20 with a collection of controls 22 for moving the working arm 14, the tracks 18, or controlling other functions of the working machine 10.

The working arm 14 includes a boom 24 pivotally attached to the chassis 12, a dipper arm 26 pivotally attached to the boom 24, and an implement pivotally attached to the dipper arm 26. In the illustrated example, the implement is a bucket 16, which is used for soil-shifting or materials handling operations (e.g. trenching, grading, and loading) and/or materials handling (e.g. depositing aggregate in trenches, lifting materials and placing them on an elevated platform). In alternative examples, the bucket 16 may be removed and replaced with an alternative implement, such as a hydraulic hammer drill.

A boom actuator 28 is provided to move the boom 24 in an ascending direction and a descending direction. The working machine 10 also includes a dipper actuator 30, for pivoting the dipper arm 26 with respect to the boom 24, and a bucket actuator 32, for pivoting the bucket 16 with respect to the dipper arm 26.

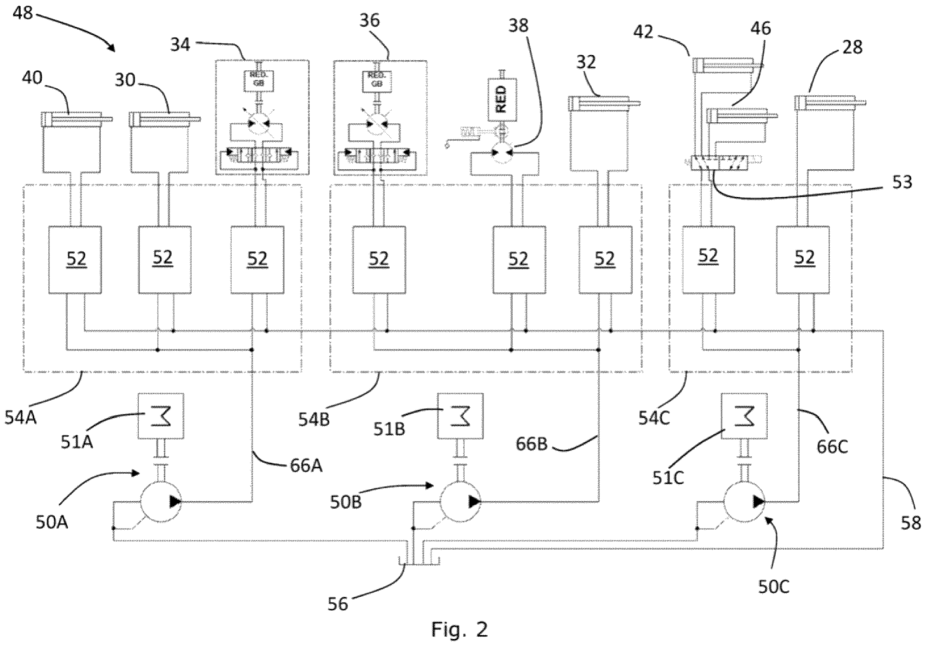

The working machine 10 also includes, shown in schematic form in Figure 2 but not shown in Figure 1: left and right track motors 34, 36 for moving the left and right tracks 18 forwards or backwards; a slew motor 38 for slewing the chassis 12 relative to the tracks 18; a swing actuator 40 for pivoting the working arm 14 about a vertical axis relative to the chassis 12; a dozer actuator 42 for actuating a dozer blade 44; and a track extend actuator 46 for varying a length of the tracks 18. In some examples, the working machine 10 also includes one or more auxiliary hydraulic ports (not shown).

In the illustrated example, the working machine 10 is a slew excavator. In alternative examples, the working machine 10 may be any type of working machine including one or more hydraulically actuated devices 28, 30, 32, 34, 36, 38, 40, 42, 46.

The working machine 10 also includes a hydraulic system for controlling the hydraulically actuated devices 28, 30, 32, 34, 36, 38, 40, 42, 46, which will be described in more detail in relation to Figures 2 to 6.

In some examples, the working vehicle 10 is an electric working vehicle, a fuel cell powered working vehicle (e.g. a working vehicle including a hydrogen fuel cell) or hybrid working vehicle of the kind having an electric source of power and an alternative source of power. The aspects of the disclosure described below have been found to significantly simplify control of electric motors for hydraulic systems. This leads to an improved robustness and improved efficiencies in operation and manufacture when the hydraulic system is used on an electric working vehicle 10.

Referring now to Figure 2, a hydraulic system for the working machine 10 of Figure 1 is indicated at 48. The hydraulic system 48 is configured to supply hydraulic fluid to the hydraulically actuated devices 28, 30, 32, 34, 36, 38, 40, 42, 46.

As will be described in more detail below, the hydraulic system 48 includes a plurality of hydraulic pump assemblies 50A, 50B, 50C each for supplying a variable output of hydraulic fluid from a tank 56 to one or more hydraulically-actuated devices 28, 30, 32, 34, 36, 38, 40, 42, 46.

In the illustrated example, each hydraulic pump assembly 50A, 50B, 50C is driven by a respective electric motor 51A, 51B, 51C, and the hydraulic system 48 is configured such that output of hydraulic fluid from each hydraulic pump assembly 50A, 50B, 50C is varied by adjusting the rotation speed of the associated electric motor 51A, 51B, 51C. This arrangement provides for simple and effective control of the output of hydraulic fluid from the hydraulic pump assemblies 50A, 50B, 50C. Furthermore, use of electric motors 51A, 51B, 51C to drive the hydraulic pump assemblies 50A, 50B, 50C is particularly beneficial when the working vehicle 10 is an electric working vehicle or fuel cell powered working vehicle without an internal combustion engine to provide a mechanical drive for the hydraulic pump assemblies 50A, 50B, 50C, or a hybrid working vehicle 10 in which an internal combustion engine is not operated continuously.

As will be described in more detail below, a first group of the hydraulically actuated devices 28, 30, 32, 34, 36, 38, 40, 42, 46 are actuated simultaneously to carry out a first set of functions of the working vehicle 10, and are not actuated in order to carry out a second set of functions of the working vehicle 10. The first group of hydraulically actuated devices includes the boom actuator 28, dipper actuator 30 and bucket actuator 32, and the first set of functions relates to movement of the working arm 14. For example, the first set of functions includes excavating material with the working arm 14; raising/lowering the working arm 14; slewing the working arm 14 about a vertical axis; and/or dumping excavated material from the working arm.

Referring to Table 1, an excavating function typically requires simultaneous actuation of the boom actuator 28 at a relatively low pressure, actuation of the dipper actuator 30 at relatively high pressure, and actuation of the bucket actuator 32 at a medium pressure. A combined lifting and slewing function typically requires simultaneous actuation of the boom actuator 28 at a relatively high pressure, actuation of the dipper actuator 30 at relatively a low pressure, and actuation of the slew motor 38 at a relatively high pressure. A dumping function typically requires simultaneous actuation of the boom actuator 28 at high pressure, actuation of the dipper actuator 30 at relatively low pressure, and actuation of the bucket actuator 32 at a relatively low pressure. A return-to-trench function (i.e. after dumping an excavated load) typically requires simultaneous actuation of the boom actuator 28 and dipper actuator 30 at relatively low pressures, and actuation of the slew motor 38 at a medium pressure.

It will be understood that Table 1 only indicates typical pressure ranges, and that the actuation pressure of hydraulically actuated devices 28, 30, 32, 34, 36, 38, 40, 42, 46 may vary throughout a working machine function based on dynamics of the system. For example, while slew motor 38 operates at high pressure during an accelerating slewing motion, the pressure will lower if a constant velocity slewing motion is achieved.

**Table 1: An overview of working machine functions and relative actuation pressures of associated hydraulically actuated devices**

| **Pump Assembly** | | **First (50A)** | | **Second (50B)** | | **Third (50C)** | | |
|---|---|---|---|---|---|---|---|---|
| **Group** | | 1 | 2 | 1 | 2 | 1 | 1 | 2 |
| **Hydraulically Actuated Device** | | Boom (28) | Dozer (42) | Dipper (30) | Left Track (34) | Bucket (32) | Slew (38) | Right track (36) |
| **First set of functions** | Excavate | LOW | | HIGH | | MEDIUM | | |
| | Lift and Slew | HIGH | | LOW | | | HIGH | |
| | Dump | HIGH | | LOW | | LOW | | |
| | Return to Trench | LOW | | LOW | | | MEDIUM | |
| **Second set of functions** | Travel | | | | MEDIUM | | | MEDIUM |
| | Levelling with Dozer | | LOW | | HIGH | | | HIGH |

As will also be described in more detail below, a second group of the hydraulically actuated devices 28, 30, 32, 34, 36, 38, 40, 42, 46 are actuated simultaneously to carry out the second set of functions of the working vehicle 10, and are not actuated in order to carry out the first set of functions of the working vehicle 10. The second group of hydraulically actuated devices includes the left and right track motors 34, 36, and the second set of functions relates to movement of the chassis 12. For example, the second set of functions includes moving the chassis 12 forward or backwards in a straight line or curved path, or rotating the chassis 12 about a vertical axis (e.g. by rotating the left and right tracks 18 in opposite directions).

In the illustrated example, the second group of hydraulically actuated devices also includes the dozer actuator 42, and the second set of functions also includes levelling material with the dozer blade 44 (e.g. by moving the chassis 12 whilst simultaneously actuating the dozer blade 44).

Referring again to Table 1, a travelling function typically requires simultaneous actuation of the left and right track motors 34, 36 at medium pressure. A levelling function with the dozer blade 44 typically requires simultaneous actuation of the dozer actuator 42 at a relatively low pressure, and actuation of the left and right track motors 34, 36 at a relatively high pressure.

It will be understood that the actuation pressure of the different actuators will vary depending on the design of the working machine 10 and hydraulic system 48. For example, in some examples, relatively high pressures may be in the range of 100 to 250 Bar, relatively low pressures may be in the range of 0 to 50 Bar, and medium pressures may be between these ranges (i.e. in the range of 50 to 100 Bar). These example pressure ranges are for a small midi excavator. It will be understood that larger excavators or other working vehicles may operate at higher pressures.

As will be described in more detail below, the hydraulic system 48 is arranged so that each of the hydraulically actuated devices 28, 30, 32 of the first group is supplied by a different hydraulic pump assembly 50A, 50B, 50C. The hydraulic system 48 is also arranged so that each of the hydraulically actuated devices 34, 36, 42 of the second group is supplied by a different hydraulic pump assembly 50A, 50B, 50C. This effectively de-couples hydraulically actuated devices which are typically actuated simultaneously, because they are supplied by different hydraulic pump assemblies.

However, it will be understood that such an architecture of the hydraulic system 48 does not preclude simultaneous actuation of hydraulically actuated devices from the first and second groups. For example, it would still be possible to carry out a third set of non-typical functions in which the chassis 12 and working arm 14 are moved simultaneously (e.g. when spreading excavated material by dumping with the working arm 14 whilst moving the chassis 12 with the tracks 18).

In some examples, at least one of the hydraulic pump assemblies 50A, 50B, 50C is arranged for supplying hydraulic fluid to both a hydraulically actuated device 28, 30, 32 of the first group and a hydraulically actuated device 34, 36, 42 of the second group.

In the example illustrated in Figure 2, the hydraulic system 48 includes three hydraulic pump assemblies 50A, 50B, 50C each for supplying a variable output of hydraulic fluid from the tank 56 to two or more of the hydraulically actuated devices 28, 30, 32, 34, 36, 38, 40, 42, 46. In other words, each of the hydraulic pump assemblies 50A, 50B, 50C is a shared pump assembly. Sharing pump flow between some hydraulically actuated devices (e.g. devices which typically operate under similar load pressures) results in a cheaper/smaller pump system than if a dedicated hydraulic pump assembly is provided for each hydraulically actuated device.

However, in alternative examples, a dedicated hydraulic pump assembly is provided for each hydraulically actuated device 28, 30, 32, 34, 36, 38, 40, 42, 46 (i.e. the number of hydraulic pump assemblies is equal to the number of hydraulically actuated devices 28, 30, 32, 34, 36, 38, 40, 42, 46). In alternative examples, more or fewer than three hydraulic pump assemblies are provided. In alternative examples, some of the hydraulic pump assemblies are shared pump assemblies supplying two or more devices, and some of the hydraulic pump assemblies are dedicated hydraulic pump assemblies supplying a single hydraulically actuated device.

In some examples, the hydraulic system 48 is configured so that each of the shared pump assemblies 50A, 50B, 50C supplies hydraulic fluid to two or more hydraulically actuated devices 28, 30, 32, 34, 36, 38, 40, 42, 46 simultaneously, as will be described in more detail below. In alternative examples, the hydraulic system 48 is configured so that each of the shared pump assemblies 50A, 50B and 50C only supplies hydraulic fluid to a single hydraulically actuated device 28, 30, 32, 34, 36, 38, 40, 42, 46 at any instant of time.

In the illustrated example, the first hydraulic pump assembly 50A supplies hydraulic fluid to the swing actuator 40, dipper actuator 30 and left hand track motor 34; the second hydraulic pump assembly 50B supplies hydraulic fluid to the right hand track motor 36, slew motor 38, and bucket actuator 32; and the third hydraulic pump assembly 50C supplies hydraulic fluid to the dozer actuator 42, track extend actuator 46 and boom actuator 28.

Such a hydraulic system configuration has been found to be a particularly efficient way of de-coupling those of hydraulically actuated devices 28, 30, 32, 34, 36, 38, 40, 42, 46 which are typically actuated simultaneously, and thus reducing the hydraulic system efficiency losses associated with parallel flows of hydraulic fluid driven by a shared pump assembly 50A, 50B, 50C. Furthermore, those of hydraulically actuated devices 28, 30, 32, 34, 36, 38, 40, 42, 46 which are driven by a shared pump assembly of this configuration typically operate at similar load pressures, which allows optimal sizing of each hydraulic pump assembly 50A, 50B, 50C, and reduces the amount of compensation required to split the flow when multiple devices are actuated by a shared pump assembly simultaneously (as described in more detail below).

Left and right track motors 34, 36 are commonly used in tandem on a working vehicle 10 (e.g. when moving the working vehicle 10 in a straight line). Therefore, having the left and right track motors 34, 36 supplied by different hydraulic pump assemblies 50A, 50B provides for independent straight line tracking control and reliable movement of the working vehicle 10. Similarly, a boom actuator 28, dipper arm actuator 30 and bucket actuator 32 are commonly used in tandem on a working vehicle 10 (e.g. when moving the working arm 14). Therefore, having the boom actuator 28, dipper actuator 30 and bucket actuator 32 supplied by different hydraulic pump assemblies 50A, 50B, 50C provides for independent working arm limb control and reliable movement of the working arm 14.

Conversely, track motors 34, 36 are not regularly used in tandem with working arm actuators 28, 30, 32 of a working vehicle 10. For example, most commonly, a working vehicle 10 moves with the working arm 14 stationary, or the working vehicle 10 is stationary whilst moving the working arm 14. Therefore, supplying a track motor 34, 36 and a working arm actuator 28, 30, 32 with hydraulic fluid from the same hydraulic pump assembly 50A, 50B is less likely to result in parallel losses associated with shared pump flow than if devices which are typically actuated together share a common hydraulic pump assembly.

In other words, those of hydraulically actuated devices 28, 30, 32, 34, 36, 38, 40, 42, 46 which are typically actuated together are effectively de-coupled because they are supplied by different hydraulic pump assemblies.

Nevertheless, in operating conditions where a track motor 34, 36 and working arm actuator 28, 30, 32 are actuated simultaneously (e.g. during a grading operation), such a hydraulic system configuration still permits simultaneous actuation via control of respective pressure compensators 70 to share the flow of hydraulic fluid from the shared pump assembly.

The hydraulic system 48 also includes a plurality of proportional control valves 52 which are each connected to a respective hydraulically-actuated device 28, 30, 32, 34, 36, 38, 40, 42, 46. The hydraulic system 48 is arranged so that hydraulic fluid exiting each of the hydraulically actuated devices 28, 30, 32, 34, 36, 38, 40, 42, 46 flows through a first restriction of a respective proportional control valve 52 before returning to the tank 56 via a tank line 58. Each proportional control valve 52 is arranged so that a second flow path is provided between one of the hydraulically actuated devices 28, 30, 32, 34, 36, 38, 40, 42, 46 and a hydraulic supply line 66A, 66B, 66C connected to a respective hydraulic pump assembly 50A, 50B, 50C.

In the illustrated example, the boom actuator 28, dipper actuator 30, bucket actuator 32, left track motor 34, right track motor 36, slew motor 38 and swing actuator 40 are each connected to a dedicated proportional control valve 52. In contrast, the dozer actuator 42 and track extend actuator 46 are connected to a common proportional control valve 52 via a switching valve 53. The switching valve 53 has a first state which connects the dozer actuator 42 to the associated proportional control valve 52, and a second state which connects the track extend actuator to the associated proportional control valve 52. Such a switching arrangement is suitable when multiple hydraulically actuated devices will never be actuated simultaneously (e.g. actuation of the dozer blade 44 and extension of the tracks 18). The switching arrangement also reduces the required number of proportional control valves 52 which are comparatively more expensive/complex than switching valves. However, it will be understood that wherever hydraulically actuated devices may need to be actuated simultaneously, they will be connected to independent proportional control valves 52.

In the illustrated example, there are three valve groups 54A, 54B, 54C which each receive hydraulic fluid from a respective one of the three hydraulic pump assemblies 50A, 50B, 50C. Each of the proportional control valves 52 is part of one of the valve groups 54A, 54B, 54C. For simplicity, the valve groups 54A, 54B, 54C and proportional control valves 52 are shown schematically in Figure 2.

The hydraulic system 48 is configured to control a flow of hydraulic fluid supplied to each hydraulically actuated device 28, 30, 32, 34, 36, 38, 40, 42, 46 by varying the output of hydraulic fluid from the hydraulic pump assemblies 50A, 50B, 50C. The hydraulic system 48 is also configured to control a flow of hydraulic fluid exiting each of the hydraulically actuated device 28, 30, 32, 34, 36, 38, 40, 42, 46 by adjusting a restriction area of the respective proportional control valves 52.

The hydraulic system 48 may be configured so that restriction of the proportional control valves 52 is controlled independently to the output from the hydraulic pump assemblies 50A, 50B, 50C. The restriction of the proportional control valves 52 being controlled independently to the output from the hydraulic pump assemblies 50A, 50B, 50C allows the pressure of an inlet side of a hydraulically actuated device 28, 30, 32, 34, 36, 38, 40, 42, 46 to be controlled separately to the pressure of an outlet side of the hydraulically actuated device 28, 30, 32, 34, 36, 38, 40, 42, 46, which has been found to improve system controllability and increase efficiency of the hydraulic system 48.

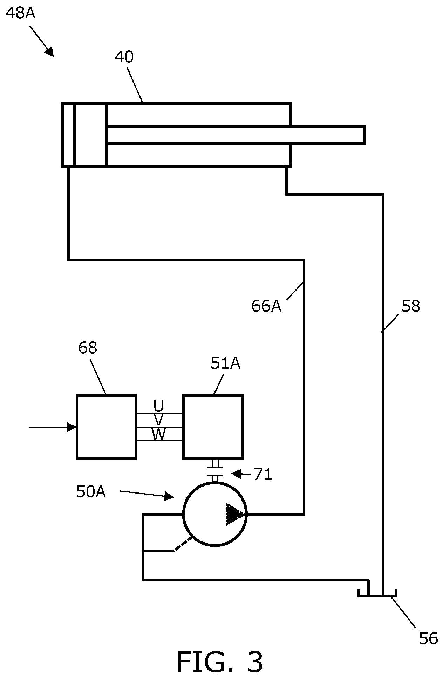

Referring now to Figure 3, a simplified hydraulic system for the working machine 10 of Figure 1 is indicated at 48A. The simplified hydraulic system 48A of Figure 3 shows corresponding features to the hydraulic system 48 of Figure 2, in addition to certain other features. The same reference numerals are used to denote the same/corresponding features in relation to Figure 2 and will not be described in detail again below. In addition, the methods and arrangements for controlling the electric motor 51A described with reference to Figures 3 to 6 may also be used to control one or more of the electric motors 51A, 51B, 51C of Figure 2.

In the example illustrated in Figure 3, a hydraulic system 48A of the working machine 10 includes a hydraulic pump assembly 50A for supplying a variable output of hydraulic fluid to the hydraulically actuated device 40. The hydraulic system 48A further includes an electric motor 51A coupled to the hydraulic pump assembly 50A to provide rotational input to the hydraulic pump assembly 50A. Output of hydraulic fluid from the hydraulic pump assembly 50A can therefore be varied by adjusting the rotation speed of the electric motor 51A.

In examples, the hydraulic system 48A further includes a motor controller 68 configured to generate or receive a motor speed command signal and generate a motor control signal for operating the electric motor 51A based on the motor speed command signal.

Typically, it is known that a feedback signal indicating the motor speed or position is a requirement for accurate control of an electric motor in any system. In known systems, an actual speed and/or rotational position of the rotor of the motor is measured, for example by a sensor, such as an encoder, and fed back to the motor controller, where it may be compared with the commanded speed and an expected rotational position of the rotor. This comparison can provide an error value, which may represent a difference between the commanded and actual speed and/or position of the rotor. The error value is typically considered to be required for stable operation at a commanded speed, especially in view of outside disturbances, such as heavy loads associated with the day-to-day operation of working machines. These actual speed and/or rotational position measurements, which may be considered a feedback signal, have to date been considered particularly important for ensuring that an inverter providing an AC current to windings of the motor is providing a suitably synchronised current to ensure accurate motor control, especially in situations in which high transitory loads are expected, as is the case in hydraulic control systems of the type described herein.

In the technical field of working machines, the skilled person has a strong technical prejudice to presume that a sensor indicating rotor position (and/or speed) in a motor is a requirement for a sufficiently accurate and dynamically reactive electric motor system, particularly in view of the high transitory loads and demand signals present in the context or working machines. This is further particularly true within the industry of working machines where accuracy is an important factor for a skilled person to consider, and accuracy and dynamic response of the overall hydraulic system is in high demand by users of such working machines.

The inventors, therefore, were particularly surprised to discover that the accuracy of the electric motor 51A to control the hydraulic system 48A was not perceptively degraded if the hydraulic system does **not** comprise a rotor positioning sensor arranged to sense the rotational position of a rotor of the electric motor 51A.

In the illustrated example, the hydraulic system 48A (or the working machine 10) does **not** comprise a rotor positioning sensor arranged to sense the rotational position of a rotor of the electric motor 51A. The motor controller 68 may not be coupled to a rotor position sensor. The motor controller 68 may not receive a feedback signal representing the rotor positioning or rotor speed of the electric motor 51A. That is, the motor controller 68 may be termed a sensorless motor controller.

In the illustrated example, the hydraulic pump assembly 50A comprises a drive shaft 71 for driving the hydraulic pump assembly 50A. The electric motor 51A is coupled to the drive shaft 71.

The motor controller 68 may be configured to calculate a motor speed command signal for the hydraulically actuated device 40 based on one or more user inputs (such as, the collection of controls 22) of the working machine 10.

The motor controller 68 is configured to calculate the motor speed command signal for the hydraulically actuated device 40 based on one or more user inputs of the working machine 10.

In some examples, the hydraulic pump assembly 50A comprises a hydraulic pump. The hydraulic pump may be a hydraulic displacement pump. Advantageously, the use of a hydraulic displacement pump improves the correlation between a commanded position or speed response and the actual position or speed response, which can reduces error and improve system response to user inputs. In some examples, the hydraulic displacement pump is a fixed hydraulic displacement pump. Advantageously, the use of a fixed hydraulic displacement pump further improves the correlation between a commanded speed response and the actual speed response. Having an electric motor 51A driving a fixed displacement pump also eliminates the need for variable swash control to vary pump output, which allows an infinite range of output flow rates without potential inefficiencies associated with partial displacement in variable swash plate piston pumps.

In the illustrated example, the motor controller 68 generates three motor control signals (U, V, W). The electric motor 51A is a three-phase motor and operates based on these three motor control signals, as is generally known. In alternative examples, the motor control signal may be any suitable signal for controlling an electric motor, which may be a single-phase or multi-phase electric motor and which may be controlled by one or more inverters configured to create a suitable AC control current from a non-AC electrical power source.

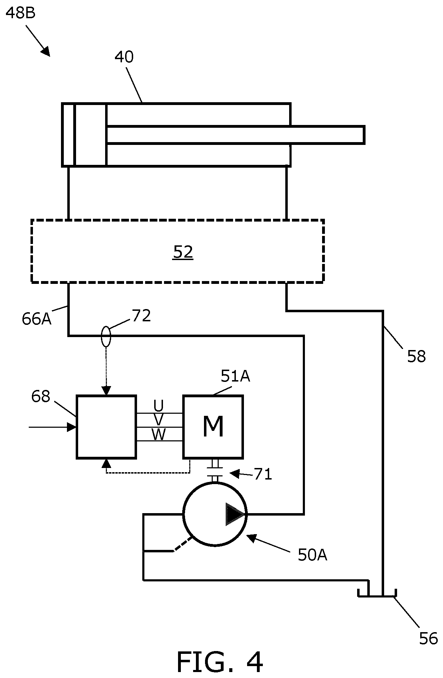

Figure 4 illustrates a hydraulic system for the working machine 10 of Figure 1 as indicated at 48B. The hydraulic system 48B of Figure 4 shows all of the features of the hydraulic system 48A of Figure 3, in addition to certain optional features. The same reference numerals are used to denote the same/corresponding features in relation to Figure 3 and will not be described in detail again below.

In the example illustrated in Figure 4, a plurality of proportional control valves 52 is shown connected to respective hydraulically-actuated device 40.

The motor controller 68 may derive the required motor control signal taking into account an operational parameter of the hydraulic system 48B. Therefore, in addition to a motor speed command, which may be derived from user inputs (one way of deriving these is described in relation to the earlier figures), the motor controller 68 may receive one or more inputs providing information relating to the hydraulic system 48B. Such an input can provide an operational parameter relating to the hydraulic system 48B to the motor controller 68. Providing such an operational parameter of the hydraulic system 48B to the motor controller 68 can enable the motor controller 68 to take into account one or more operational parameters of the hydraulic system 48B when determining the required control signal to be provided to the motor 51A. Operational parameters of the hydraulic system can have an influence on the output required from the motors 51A, 51B, 51C providing power to the hydraulic system via the pumps 50A, 50B, 50C. For example, a measured pressure in the hydraulic system 48B may influence how much torque is required to be provided by the motor 51A as will be described in the following. Alternative operational parameters of the hydraulic system 48B may include any parameter which has an influence on the pressure or flow required of the motor 51A. Other parameters, such as fluid temperature, system orientation, actuator positions, ambient temperature, etc. could influence the speed or torque required from the motor 51A and so may be provided to the motor controller 68 as operational parameters to take into account when deriving a motor control signal in the motor controller 68.

In the illustrated example, the motor controller 68 is configured to receive a torque command signal, the motor control signal is based on the torque command signal and the motor speed command signal. That is, the motor control signal may be a function of the motor speed command signal and the torque command signal.

The torque command signal represents the expected hydraulic load or pressure in the hydraulic system 48B generated by the hydraulic pump assembly 50A, which may also be influenced by the operational loading (e.g. heavy loads associated with operation) of the working machine. It will be understood that the power of the electric motor 51A can be calculated from a motor speed command signal and a torque command signal. Thus, the motor controller 68 may improve the correlation between a commanded speed response and the actual speed response. In addition, providing the torque command signal to the motor controller 68 to generate the motor control signal improves responsiveness of the hydraulic system 48B to user inputs, taking into account plural command signals, such as the motor speed command signal and the motor torque command signal. In this context, an operational parameter of the system fed into the motor controller to improve its performance, such as the torque command signal, may be considered to be a feedforward signal. The feedforward signal may be based upon an operational parameter of the hydraulic system, which may be a dynamic measured operational parameter of the hydraulic system.

In the illustrated example, the torque command signal can be generated based on a pressure signal. The hydraulic system 48B may comprise a pressure sensor 72 in communication with the hydraulic fluid. The pressure signal is (or in alternative examples, may represent,) a pressure measurement of the pressure sensor 72. That is, the pressure signal is a measured pressure of the hydraulic system 48B. The pressure sensor 72 is arranged to measure the hydraulic fluid pressure of the hydraulic supply line 66A. As shown in Figure 4, the pressure sensor 72 is positioned between the proportional control valve 52 and hydraulic pump assembly 50A. The torque command signal may be generated from the pressure signal in many ways. For example, the pressure signal may be multiplied by a gain to generate the torque command signal, or the pressure signal may be applied to a look-up-table (LUT) which provides an output corresponding to the torque command signal. Advantageously, a LUT may be desirable for use with the motor controller 68 as it simplifies a function which converts the pressure signal to a torque command signal and therefore improves system responsiveness and efficiency.

The torque command signal may be any signal representative of a desired motor torque, and in some examples may be an AC current. In alternative examples, the AC current may be generated based on (or be a function of) the torque command signal. For example, the AC current may be proportional to the torque command signal multiplied by a constant of proportionality, K.

The motor controller 68 may derive the required motor control signal taking into account an operational parameter of the electric motor 51A. Therefore, in addition to motor speed command and optionally a torque command signal, which may be derived from user inputs (one way of deriving these is described in relation to the earlier figures) or operational parameters of the hydraulic system 48B, the motor controller 68 may receive one or more inputs providing information relating to the electric motor 51A. Such an input can provide an operational parameter relating to the electric motor 51A to the motor controller 68. Providing such an operational parameter of the electric motor 51A to the motor controller 68 can enable the motor controller 68 to take into account one or more operational parameters of the electric motor 51A when determining the required control signal to be provided to the electric motor 51A. Operational parameters of one electric motor 51A, 51B, 51C can have an influence on the output required from the motor controller 68 to the motor(s) 51A, 51B, 51C to generate the desired torque or rotational speed.. For example, a motor temperature in the electric motor 51A may influence the resistance of the windings of the electric motor 51A, and thus the required motor control signal for a given torque and/or rotational speed output, as will be described in the following. Alternative operational parameters of the electric motor 51A may include any parameter which has an influence on the relationship between voltage, current, and the rotor speed of the motor 51A. Other parameters, such as back EMF, system design and materials, ambient temperature, etc. could influence the speed or torque required from the electric motor 51A and so may be provided to the motor controller 68 as operational parameters to take into account when deriving a motor control signal in the motor controller 68. The operational parameter of the electric motor 51A is **not** a sensed rotor position or a sensed rotor speed taken from a sensor of the electric motor 51A.

In the illustrated example, the motor controller 68 is configured to receive a temperature signal representative of a motor temperature sensor incorporated into, or in thermal proximity, to the electric motor 51A. The temperature signal may be used by the motor controller 68 to provide temperature compensation.

In the illustrated examples of Figures 3 and 4, the hydraulically actuated device is the swing actuator 40. However, any hydraulically actuated device may be used instead of, or in addition to, the swing actuator 40. In alternative examples, the hydraulically actuated device is one of: a boom actuator 28 for raising or lowering a working arm of the working machine; a track extender actuator 46 for varying a length of tracks of the working machine; a dozer actuator 42 for actuating a dozer blade of the working machine; a dipper arm actuator 30 for pivoting a dipper arm of the working machine relative to a boom of the working machine; a swing actuator 40 for pivoting the working arm of the working machine about a vertical axis relative to a chassis of the working machine; a left track motor 34 for moving the left track of the working machine forwards or backwards; a bucket actuator 32 for pivoting a bucket of the working machine relative to a dipper arm of the working machine; a slew motor 38 for slewing a chassis of the working machine relative to tracks of the working machine; and/or, a right track motor 36 for moving the right track of the working machine forwards or backwards.

Returning to the illustrated example of Figure 2, it is shown that the hydraulic system 48 comprises electric motors 51A, 51B, 51C, each arranged to control an associated hydraulic pump assemblies 50A, 50B, 50C, and each configured to operate multiple hydraulically actuated devices 40, 30, 34, 36, 38, 32, 42, 46, 28. In some examples, the control of each electric motor 51A, 51B, 51C of Figure 2 may be substantially similar to the control of electric motor 51A of Figures 3 and 4 in that the hydraulic system 48 does not comprise a rotor positioning sensor arranged to sense the rotational position of a rotor of any electric motor 51A, 51B, 51C. In some examples, an electric motor (e.g., electric motor 51A of Figure 3 or 4) does not comprise a rotor positioning sensor arranged to sense the rotational position of a rotor of the electric motor, and the electric motor 51A may be coupled to a hydraulic pump assembly such that output of hydraulic fluid from the hydraulic pump assembly supplies hydraulic fluid to a plurality of hydraulically actuated devices.

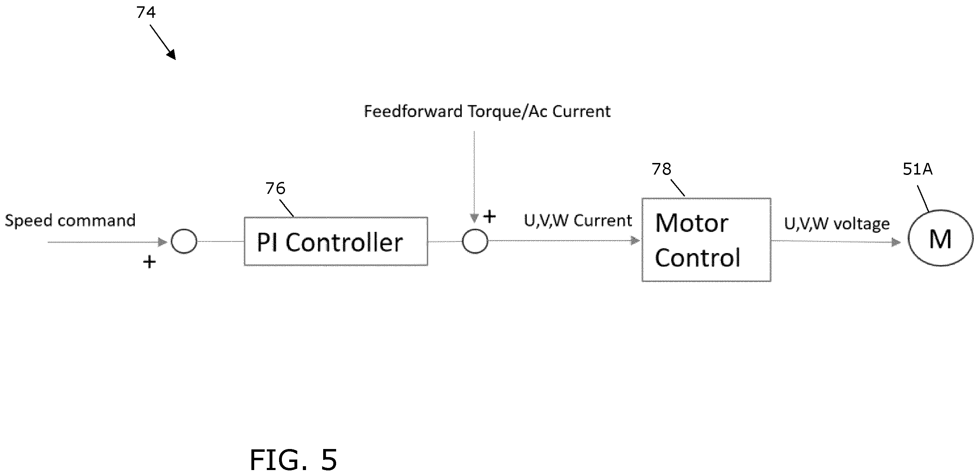

Referring now to Figure 5, a control diagram representing processes of the motor controller 68 for the working machine 10 of Figure 1 is indicated at 74.

In the illustrated example, the control diagram 74 comprises a proportional-integral (PI) controller block 76 and a motor controller block 78. The motor speed command signal is provided to the PI controller 76. The torque command signal is provided to the output of the PI controller 76. In some examples, the torque command signal is a AC current, and the AC current is added to the output current of the PI controller 76 to generate a current control signal (e.g., U,V W current signal). The motor controller block receives the current control signal and generates the motor control signal for controlling the electric motor 51A.

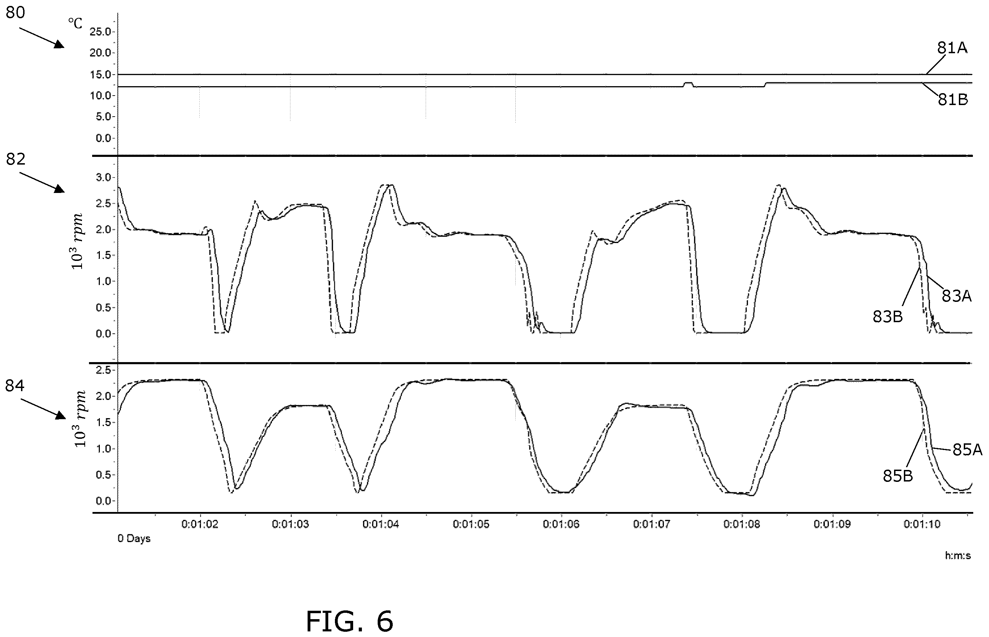

Referring now to Figure 6, three graphs 80, 82, 84 show experimental data of hydraulic pump assemblies being controlled with a prior art approach and the approach of an example of the invention according to Figure 4.

The first graph 80 of Figure 6 illustrates the temperature of two substantially similar electric motors 51A varying with time. Specifically, line 81A represents the temperature of a first electric motor, and line 81B represents the temperature of a second electric motor, substantially similar to the first electric motor.

The second graph 82 of Figure 6 illustrates an actual speed and a commanded speed of a first electric motor (coupled to a hydraulic pump assembly in a hydraulic system arrangement similar to that shown in Figure 3) varying in time. Specifically, the solid line 83A illustrates the actual speed of the first motor in response to the commanded speed (shown by dashed line 83B). The first motor is controlled based on feedback from a motor encoder which provides position information to a motor controller, as is generally known in the prior art. The second graph 82 illustrates that there is a small and imperceptible difference between the commanded speed and the actual speed of the first electric motor, as would be expected in a sensed motor control approach.

The third graph 84 of Figure 6 illustrates an actual speed and a commanded speed of a second electric motor (coupled to a hydraulic pump assembly in a hydraulic system arrangement similar to that shown in Figure 3) varying in time. Specifically, the solid line 85A illustrates the actual speed of the second motor in response to the commanded speed (shown by dashed line 85B). The second motor is controlled in accordance with an example of the invention according to Figure 4. The third graph 84 surprisingly illustrates (similar to the second graph 82) that there is a small and imperceptible difference between the commanded speed and the actual speed of the second electric motor. This is contrary to the technical prejudice in the art and it was surprising to the inventors that this sensorless motor control approach was even remotely comparable to the sensed motor control approach.

In some examples, the motor controller 68 is a motor control integrated circuit (IC). The motor control IC may be configured to have an input for receiving an electric motor temperature signal for the purpose of compensating the motor control signal in response to changes in motor temperature. The motor control IC may be configured to have a controller area network (CAN) communication interface to enable efficient communication primarily between electronic control units (ECUs). The motor control IC may receive the motor speed command signal and/or the torque command signal via the CAN communication interface.

Although the invention has been described above with reference to one or more preferred examples, it will be appreciated that various changes or modifications may be made without departing from the scope of the invention as defined in the appended claims.

## Claims

1. A working machine (10) comprising a hydraulic system (48), the hydraulic system comprising:
a hydraulically actuated device (28; 30; 32; 34; 38; 40; 42; 46);
a hydraulic pump assembly (50A) for supplying a variable output of hydraulic fluid to the hydraulically actuated device;
an electric motor (51A) coupled to the hydraulic pump assembly such that output of hydraulic fluid from the hydraulic pump assembly is varied by adjusting the rotation speed of the electric motor;
a motor controller (68) configured to: generate a motor control signal for operating the electric motor (51A) based on a motor speed command signal, wherein the hydraulic system does **not** comprise a rotor positioning sensor arranged to sense the rotational position of a rotor of the electric motor, wherein the motor controller (68) does **not** receive a feedback signal representing the rotor positioning or rotor speed of the electric motor, **characterised in that** the motor controller is further configured to receive a torque command signal, wherein the motor control signal is based on the torque command signal, wherein the torque command signal is a feedforward signal.

2. A working machine according to claim 1, the hydraulic pump is a hydraulic displacement pump.

3. A working machine according to claim 2, wherein the hydraulic displacement pump is a fixed hydraulic displacement pump.

4. A working machine according to any preceding claim, wherein the hydraulic pump assembly (50A) comprises a drive shaft (71) for driving the hydraulic pump assembly, wherein the electric motor (51A) is coupled to the drive shaft.

5. A working machine according to any preceding claim, wherein the motor controller (68) is configured to calculate the motor speed command signal for the hydraulically actuated device based on one or more user inputs of the working machine.

6. A working machine according to any preceding claim, wherein the torque command signal represents the expected hydraulic load.

7. A working machine according to any preceding claim, wherein the motor controller (68) is further configured to generate the torque command signal based on a pressure signal.

8. A working machine according to claim 7, wherein the hydraulic system further comprises a pressure sensor (72) in communication with the hydraulic fluid, wherein the pressure signal represents a pressure measurement of the pressure sensor.

9. A working machine according to any of claims 7 or 8, wherein the torque command signal is generated based on a look up table which receives the pressure signal.

10. A working machine according to any preceding claim, wherein the hydraulically actuated device is one of:
a boom actuator (28) for raising or lowering a working arm of the working machine;
a track extender actuator (46) for varying a length of tracks of the working machine; and/or,
a dozer actuator (42) for actuating a dozer blade of the working machine.

11. A working machine according to any of claims 1 to 9, wherein the hydraulically actuated device is one of:
a dipper arm actuator (30) for pivoting a dipper arm of the working machine relative to a boom of the working machine;
a swing actuator (40) for pivoting the working arm of the working machine about a vertical axis relative to a chassis of the working machine; and/or
a left track motor (34) for moving the left track of the working machine forwards or backwards.

12. A working machine according to any of claims 1 to 9, wherein the hydraulically actuated device is one of:
a bucket actuator (32) for pivoting a bucket of the working machine relative to a dipper arm of the working machine;
a slew motor (38) for slewing a chassis of the working machine relative to tracks of the working machine; and/or,
a right track motor (36) for moving the right track of the working machine forwards or backwards.

## Patentansprüche

1. Arbeitsmaschine (10), die ein hydraulisches System (48) umfasst, wobei das hydraulische System Folgendes umfasst:
eine hydraulisch angetriebene Vorrichtung (28; 30; 32; 34; 38; 40; 42; 46);
eine Hydraulikpumpenanordnung (50A) zum Zuführen einer variablen Menge an hydraulischer Flüssigkeit zu der hydraulisch betätigten Vorrichtung;
ein Elektromotor (51A), der so mit der Hydraulikpumpenanordnung gekoppelt ist, dass die Ausgabe von hydraulischer Flüssigkeit aus der Hydraulikpumpenanordnung durch Einstellen der Drehzahl des Elektromotors variiert wird;
eine Motorsteuerung (68), die zu Folgendem konfiguriert ist: Erzeugen eines Motorsteuersignals zum Betreiben des Elektromotors (51A) auf der Grundlage eines Motordrehzahlbefehlssignals, wobei das hydraulische System keinen Rotorpositionssensor umfasst, der dazu ausgelegt ist, die Drehposition eines Rotors des Elektromotors zu erfassen, wobei die Motorsteuerung (68) kein Rückkopplungssignal empfängt, das die Rotorposition oder die Rotordrehzahl des Elektromotors angibt, **dadurch gekennzeichnet, dass**
die Motorsteuerung weiter so konfiguriert ist, dass sie ein Drehmomentbefehlssignal empfängt, wobei das Motorsteuersignal auf dem Drehmomentbefehlssignal basiert und wobei das Drehmomentbefehlssignal ein Vorwärtskopplungssignal ist.

2. Arbeitsmaschine nach Anspruch 1, wobei die Hydraulikpumpe eine Hydraulikverdrängerpumpe ist.

3. Arbeitsmaschine nach Anspruch 2, wobei es sich bei der Hydraulikverdrängerpumpe um eine feststehende Hydraulikverdrängerpumpe handelt.

4. Arbeitsmaschine nach einem der vorstehenden Ansprüche, wobei die Hydraulikpumpenanordnung (50A) eine Antriebswelle (71) zum Antreiben der Hydraulikpumpenanordnung umfasst, wobei der Elektromotor (51A) mit der Antriebswelle gekoppelt ist.

5. Arbeitsmaschine nach einem der vorstehenden Ansprüche, wobei die Motorsteuerung (68) so konfiguriert ist, dass sie das Motordrehzahlbefehlssignal für die hydraulisch angetriebene Vorrichtung auf der Grundlage einer oder mehrerer Benutzereingaben der Arbeitsmaschine berechnet.

6. Arbeitsmaschine nach einem der vorstehenden Ansprüche, wobei das Drehmomentbefehlssignal die erwartete hydraulische Last darstellt.

7. Arbeitsmaschine nach einem der vorstehenden Ansprüche, wobei die Motorsteuerung (68) weiter so konfiguriert ist, dass sie das Drehmomentbefehlssignal auf der Grundlage eines Drucksignals erzeugt.

8. Arbeitsmaschine nach Anspruch 7, wobei das hydraulische System weiter einen Drucksensor (72) umfasst, der mit der hydraulischen Flüssigkeit in Verbindung steht, wobei das Drucksignal einen Druckmesswert des Drucksensors darstellt.

9. Arbeitsmaschine nach einem der Ansprüche 7 oder 8, wobei das Drehmomentbefehlssignal auf der Grundlage einer Nachschlagetabelle erzeugt wird, die das Drucksignal empfängt.

10. Arbeitsmaschine nach einem der vorstehenden Ansprüche, wobei die hydraulisch angetriebene Vorrichtung eines von Folgendem ist:
ein Auslegeraktuator (28) zum Anheben oder Absenken eines Arbeitsarms der Arbeitsmaschine;
ein Bahnverlängerungsaktuator (46) zum Verändern der Länge der Bahnen der Arbeitsmaschine; und/oder,
ein Planierstellantrieb (42) zum Betätigen eines Planierschilds der Arbeitsmaschine.

11. Arbeitsmaschine nach einem der Ansprüche 1 bis 9, wobei die hydraulisch angetriebene Vorrichtung eines von Folgendem ist:
ein Taucharmaktuator (30) zum Schwenken eines Taucharms der Arbeitsmaschine relativ zu einem Ausleger der Arbeitsmaschine;
ein Schwenkantrieb (40) zum Schwenken des Arbeitsarms der Arbeitsmaschine um eine vertikale Achse relativ zu einem Fahrgestell der Arbeitsmaschine; und/oder
ein linker Bahnmotor (34) zum Vorwärts- oder Rückwärtsbewegen der linken Bahn der Arbeitsmaschine.

12. Arbeitsmaschine nach einem der Ansprüche 1 bis 9, wobei die hydraulisch angetriebene Vorrichtung eines von Folgendem ist:
ein Schaufelaktuator (32) zum Schwenken einer Schaufel der Arbeitsmaschine relativ zu einem Taucharm der Arbeitsmaschine;
ein Schwenkmotor (38) zum Schwenken eines Fahrgestells der Arbeitsmaschine relativ zu den Bahnen der Arbeitsmaschine; und/oder,
ein rechter Bahnmotor (36) zum Vorwärts- oder Rückwärtsbewegen der rechten Bahn der Arbeitsmaschine.

## Revendications

1. Machine de travail (10) comprenant un système hydraulique (48), le système hydraulique comprenant :
un dispositif actionné hydrauliquement (28 ; 30 ; 32 ; 34 ; 38 ; 40 ; 42 ; 46) ;
un ensemble (50A) de pompe hydraulique délivrant un débit variable de fluide hydraulique au dispositif actionné hydrauliquement ;
un moteur électrique (51A) couplé à l'ensemble de pompe hydraulique de telle sorte que le débit de fluide hydraulique provenant de l'ensemble de pompe hydraulique varie par ajustement de la vitesse de rotation du moteur électrique ;
un dispositif de commande (68) de moteur configuré pour : la génération d'un signal de commande de moteur pour faire fonctionner le moteur électrique (51A) sur la base d'un signal de commande de vitesse de moteur, dans laquelle le système hydraulique ne comprend pas de capteur de position de rotor agencé pour détecter la position de rotation d'un rotor du moteur électrique, dans laquelle le dispositif de commande (68) de moteur ne reçoit pas de signal de retour représentant la position du rotor ou la vitesse du rotor du moteur électrique, **caractérisée en ce que** le dispositif de commande du moteur est en outre configuré pour recevoir un signal de commande de couple, dans laquelle le signal de commande du moteur est basé sur le signal de commande de couple, dans laquelle le signal de commande de couple est un signal d'anticipation.

2. Machine de travail selon la revendication 1, la pompe hydraulique est une pompe hydraulique volumétrique.

3. Machine de travail selon la revendication 2, dans laquelle la pompe hydraulique volumétrique est une pompe hydraulique volumétrique à cylindrée fixe.

4. Machine de travail selon une quelconque revendication précédente, dans laquelle l'ensemble (50A) de pompe hydraulique comprend un arbre d'entraînement (71) pour entraîner l'ensemble de pompe hydraulique, dans laquelle le moteur électrique (51A) est couplé à l'arbre d'entraînement.

5. Machine de travail selon une quelconque revendication précédente, dans laquelle le dispositif de commande (68) de moteur est configuré pour calculer le signal de commande de vitesse de moteur pour le dispositif actionné hydrauliquement sur la base d'une ou plusieurs entrées d'utilisateur de la machine de travail.

6. Machine de travail selon une quelconque revendication précédente, dans laquelle le signal de commande de couple représente la charge hydraulique attendue.

7. Machine de travail selon une quelconque revendication précédente, dans laquelle le dispositif de commande (68) de moteur est en outre configuré pour générer le signal de commande de couple sur la base d'un signal de pression.

8. Machine de travail selon la revendication 7, dans laquelle le système hydraulique comprend en outre un capteur de pression (72) en communication avec le fluide hydraulique, dans laquelle le signal de pression représente une mesure de pression du capteur de pression.

9. Machine de travail selon l'une quelconque de la revendication 7 ou la revendication 8, dans laquelle le signal de commande de couple est généré sur la base d'un tableau de consultation qui reçoit le signal de pression.

10. Machine de travail selon une quelconque revendication précédente, dans laquelle le dispositif actionné hydrauliquement est l'un parmi :
un actionneur de flèche (28) conçu pour lever ou abaisser un bras de travail de la machine de travail ;
un actionneur d'extension de chenilles (46) pour faire varier une longueur de chenilles de la machine de travail ; et/ou,
un actionneur de bouteur (42) conçu pour actionner une lame de bouteur de la machine de travail.

11. Machine de travail selon l'une quelconque des revendications 1 à 9, dans laquelle le dispositif actionné hydrauliquement est l'un parmi :
un actionneur de bras de manœuvre (30) conçu pour faire pivoter un bras de manœuvre de la machine de travail par rapport à une flèche de la machine de travail ;
un actionneur de balancement (40) conçu pour faire pivoter le bras de travail de la machine de travail autour d'un axe vertical par rapport à un châssis de la machine de travail ; et/ou
un moteur (34) de chenille gauche conçu pour déplacer la chenille gauche de la machine de travail vers l'avant ou vers l'arrière.

12. Machine de travail selon l'une quelconque des revendications 1 à 9, dans laquelle le dispositif actionné hydrauliquement est l'un parmi :
un actionneur de godet (32) conçu pour faire pivoter un godet de la machine de travail par rapport à un bras de manœuvre de la machine de travail ;
un moteur rotatif (38) pour faire tourner un châssis de la machine de travail par rapport à des chenilles de la machine de travail ; et/ou,
un moteur de chenille droite (36) conçu pour déplacer la chenille droite de la machine de travail vers l'avant ou vers l'arrière.
